(19) Europäisches Patentamt
European Patent Office
Office européen des brevets

(11) EP 1 306 805 A1

(12) EUROPEAN PATENT APPLICATION

(43) Date of publication:
02.05.2003 Bulletin 2003/18

(51) Int Cl.$^7$: **G06T 7/40**, G06T 9/00

(21) Application number: **01309065.9**

(22) Date of filing: **25.10.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicants:
- **Mitsubishi Electric Information Technology Centre Europe B.V.**
  **Guildford, Surrey GU2 5YD (GB)**
  Designated Contracting States:
  **GB**
- **MITSUBISHI DENKI KABUSHIKI KAISHA**
  **Tokyo 100 (JP)**
  Designated Contracting States:
  **AT BE CH CY DE DK ES FI FR GR IE IT LU MC NL PT SE TR LI**

(72) Inventors:
- **Szajnowski, Wieslaw Jerzy**
  **Surrey GU1 2AR (GB)**
- **Bober, Miroslaw**
  **Surrey GU1 2SE (GB)**

(74) Representative: **Burke, Steven David et al**
**R.G.C. Jenkins & Co.**
**26 Caxton Street**
**London SW1H 0RJ (GB)**

(54) **Image Analysis**

(57) A method of classifying an image, in particular the texture of an image, involves first deriving a feature vector representing the texture by mapping a two-dimensional representation of the image into a one-dimensional representation using a predetermined mapping function, and then determining (i) the rate at which the level of the representation crosses a threshold, (ii) the rate at which the level changes when a threshold is crossed, and (iii) the average duration for which the level remains above (or below) a threshold.

**FIGURE 1**

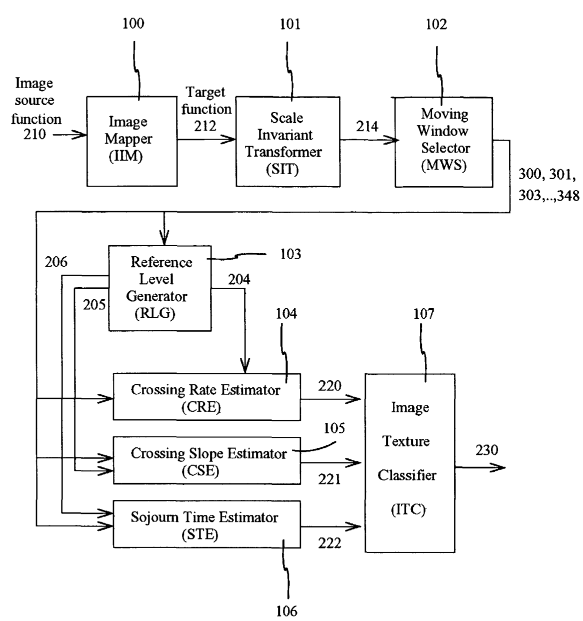


EP 1 306 805 A1

## Description

This invention relates to methods and apparatus for analysis of images, and is especially related to analysis and classification of image textures.

Certain visual characteristics of regions in images, relating to the regularity, coarseness or smoothness of the intensity/colour patterns are commonly referred to as texture properties. Texture properties are important to human perception and recognition of objects. They are also applicable for various tasks in machine vision, for example for automated visual inspection or remote sensing, such as analysing satellite images.

Texture analysis usually involves extraction of characteristic texture features from images or regions, which can be later used for image matching, region classification, etc.

Many existing approaches to texture analysis can be classified into one of three broad classes: i) structural approaches, ii) statistical approaches and iii) spectral approaches.

In a structural approach, the texture is characterised by features and spatial arrangements of certain visual primitives, such as blobs, line segments, corners, etc.

In a statistical approach, the texture is characterised by statistical distribution of intensity values within a region of interest.

In a spectral approach, a set of filters with varying properties is used, and their response to the underlying image is used as feature vector. For example Gabor filters with varying directional and frequency responses can be used. (See D. Dunn, W. Higgins, and J. Wakeley, "Texture segmentation using 2-D Gabor elementary functions", *IEEE Trans. Pattern Anal. And Machine Intell.,* vol. 16, no. 2, Feb. 1994)

These known methods generally operate in the image domain, usually defined as a two-dimensional (2-D) lattice.

It is also known than an image can be mapped into a one-dimensional (1-D) representation using a mapping function, for example a plane-filling curve such as a Peano curve or a Hilbert curve. (See Peano G. "Sur une courbe que remplit toute une aire plane", *Math Annln.*, *36,* pp. 157-160 (1890), and D. Hilbert, "Uber die stetige Abbildung einer Linie auf ein Flachenstuck", *Math. Annln, 38,* pp. 459-460 (1891).) Subsequently the properties of the 1-D signal could be analysed, for example by Fourier analysis, to determine the texture features of the image.

The majority of the existing approaches are computationally intensive. It would be desirable to provide a method and apparatus for texture description, classification and/or matching which is invariant to changes in image intensity, region translation and rotation, the method being computationally simple.

Aspects of the present invention are set out in the accompanying claims.

In accordance with a further aspect of the invention, a one-dimensional representation of an image is statistically analysed to derive a feature vector representative of the image.

The analysis preferably involves comparison of the one-dimensional representation with at least one threshold, and may be arranged to determine any one or more of the following:

(a) the rate at which the representation crosses a threshold;

(b) the average slope of the representation at points where a threshold is crossed. The points could be selected to be those where the representation values are increasing (to obtain the average "upslope"), or those where the representation values are decreasing (to obtain the average "downslope"). Alternatively, both the average upslope and the average downslope could be determined, or simply the average slope at all the points; and

(c) the average interval for which the representation remains above (or below) a threshold.

It has been found that the above parameters, which can be obtained in a computationally simple manner, provide a good discriminant for the many image classes, and particularly image textures. A combination of parameters (a) and (b) has been found to be especially effective.

A preferred embodiment of a method according to the present invention comprises the following steps:

1. Mapping a 2-D function (the "source function") into a 1-D function (the "target function") by utilizing a transformation based on a suitably chosen plane-filling curve, for example a self-avoiding curve with the property that neighbouring points in the target function are also neighbours in the source function. Examples of such curves are Peano curves and Hilbert curves;
2. Applying a suitable transformation to the resulting target function. One example of such a transformation is a logarithmic transformation producing a scale-invariant target function.
3. Selecting a discriminating level within the dynamic range of the target function;
4. Determining a set of points at which the target function crosses the selected discriminating level;
5. Determining suitable statistical characteristics of the set, for example (i) rate at which the points occur, (ii) average slope of the target function at the points, and (iii) average interval during which the target function remains above (or below) the discriminating level between adjacent points; and
6. Combining the selected statistical characteristics (determined in step 5) to construct a feature vector describing the source function, hence the image.

This feature vector may relate to only a part of the image represented by a part of the one-dimensional target function. Further feature vectors can also be derived for other parts of the image. In the preferred embodiment, successive overlapping segments of the one-dimensional function are analysed to derive respective feature vectors. It is, however, not essential that the segments be overlapping.

In the preferred embodiment, each of the statistical characteristics is determined by comparing the one-dimensional representation with a threshold level. The threshold may be different for different characteristics, or may be the same for at least some of those characteristics. It is also possible to replace a simple fixed-value threshold by a varying threshold (the term "threshold function" being used herein to refer both to a varying threshold and to a fixed-value threshold, wherein the function is a predetermined constant).

In an enhancement of the invention, better discrimination is achieved by separately determining the rate at which the target function crosses respective different threshold functions. Preferably, for at least one threshold function, two separate values for the average slope of the target function at the crossing points are derived, one value representing the slope of the function when the function is increasing (the "upslope"), and the other value representing the slope of the function when the function is decreasing (the "downslope").

Statistical characteristics other than averages may be used for deriving any of the values used to construct the feature vector, such as means, medians or variances.

Although the invention is primarily described in the context of analysing texture represented by the grey levels of an image, the texture could additionally or alternatively be represented by other characteristics, such as colour.

Arrangements embodying the present invention will now be described by way of example with reference to the accompanying drawings, in which:

Figure 1 is a block diagram of a texture classifying system according to the invention;
Figure 2 illustrates Peano scanning of an image;
Figure 3 illustrates the operation of a moving window selector;
Figure 4 illustrates the operation of a crossing rate estimator;
Figure 5 illustrates the operation of a crossing slope estimator;
Figure 6 illustrates the operation of a sojourn interval estimator;
Figure 7 is a diagram showing the partitioning of a feature space to enable texture classification.

Figure 1 is a block diagram of a texture classifier according to the present invention.

An input image mapper (IIM) 100 employs the so-called Peano scanning to represent grey-level values of the two-dimensional (2-D) input image received at input 210 by a one-dimensional (1-D) function produced at output 212, referred to as the target function. Figure 2 illustrates an example of Peano scanning applied to a reference image of 9 by 9 pixels. The image is shown at 210' and the path corresponding to the Peano scanning at 211. The graph shown at 212' represents the target function produced at output 212. In this example, it is assumed that pixel width equals 1 and therefore the pixel index on the graph 212' corresponds to the distance from the pixel with the index 0.

A scale-invariant transformer (SIT) 101 uses a suitable logarithmic transformation to convert the target function at output 212 of the IIM 100 into a target-function representation at 214, with values independent of the dynamic range of the 2-D input image. The dynamic range of the input image may be affected by varying illumination conditions, changes in local sensitivity of an image sensor, etc.

A moving window selector (MWS) 102, driven by the signal at 214 from the scale-invariant transformer (SIT) 101, selects segments of the target function representation suitable for further processing. This is illustrated in Figure 3. The target function shown on plot 214' is subdivided into 49 continuous overlapping segments (300,..,348), each of 32 pixels in length.

The output of the MWS 102 is applied in parallel to the signal inputs of a plurality of feature estimators, including a crossing rate estimator (CRE) 104, a crossing slope estimator (CSE) 105, and a sojourn interval estimator (STE) 106.

The control input of the crossing rate estimator (CRE) 104 is connected to a reference level generator (RLG) 103 to receive on line 204 a signal defining a suitable rate threshold function (in this embodiment a simple constant value) for setting a discriminating level used for feature extraction from the representation of the target function. Similarly, the crossing slope estimator (CSE) 105 and sojourn interval estimator (STE) 106 receive from reference level generator (RLG) 103 on lines 205 and 206 respectively signals defining a suitable slope threshold function and a suitable duration threshold function for setting the discriminating levels which those estimators use for feature extraction.

In the present embodiment, all three estimators receive signals which define a common, fixed-value discriminating level, shown at 401 in Figures 4 to 6. This may be chosen in different ways; the level 401 could represent the median of the values in the one-dimensional output of the transformer 214, or the median of the values in the current window. However, the discriminating levels of the estimators may alternatively differ from each other, and could be variable.

Referring to Figure 4, the crossing rate estimator (CRE) 104 determines the number of points at which the target function representation 214 has crossed a selected discriminating level 401 within each specified segment. The output 220 of the CRE is applied to an input of an image texture classifier ITC. The example of Figure 4 relates to the analysis performed for the fourth window, W4. The signal crosses the discriminating level 401 eight times; marked as T1,T2, ...T8.

Referring to Figure 5, the crossing slope estimator (CSE) 105 determines the average value of the slopes at the points where the target function representation 214' has crossed a selected discriminating level within each specified window. Figure 5 shows an example for window W4 where the target function crosses discriminating level 401 at points: T1, T3, T5, T7 (upcrossings) and T2,T4,T6,T8 (downcrossings). Slope values, such as ψ1, -ψ2, ψ3, etc. are computed for each point T1,..,T8 and then the downslopes and upslopes are averaged separately and these values are suitably combined. The result, indicative of the average slope or steepness of the representation at the crossing points, is provided at output 221 of the CSE and applied to an input of the image texture classifier ITC.

Referring to Figure 6, the sojourn interval estimator (STE) 106 determines the average length of intervals in which the target function representation 214 remains above a selected discriminating level within each specified segment. Figure 6 shows an example of sojourn interval calculation for window W4, using the discriminating level 401. The target function exceeds the discriminating level in four intervals: 501, 502, 503 and 504, so the STE 106 computes the arithmetic average of the length of these four intervals. The output of the STE 106 is applied to a further input 222 of the image texture classifier ITC.

The image texture classifier (ITC) 107 processes jointly feature data available at its inputs to perform texture classification of the 2-D input image. The procedure used for texture classification may be based on partitioning of the entire feature space into a specified number of regions that represent texture classes of interest.

Figure 7 shows an example of a three-dimensional (3D) feature space S, each dimension corresponding to a parameter produced by a respective one of the CRE 104, the CSE 105 and the STE 106. The space S is partitioned into M regions S1, S2,...,SM in such a way that each region represents one of M texture classes of interest. One of those regions (which may comprise a number of suitable subregions) can be used to represent a class of unspecified (unknown) texture.

The regions are non-overlapping, i.e.,

$$Si \cap Sj = \emptyset, i,j = 1, 2, ... ,M \qquad i \neq j$$

and the partition of the entire feature space S is exhaustive, i.e.,

$$S1 \cup S2 \cup ... \cup SM = S$$

An image analysis procedure, according to the present invention, produces numerical values from the three estimators, CRE, CSE and STE, available at the outputs 220, 221 and 222, respectively. In the 3D feature space, such a triplet can be viewed as a point which must fall into one of the regions S1, S2,...,SM. If the point falls into Sk, $1 \leq k \leq M$, then a decision is made that an image under test exhibits the texture belonging to class k of M texture classes.

Partitioning of the feature space S into M regions may be performed according to some optimisation criterion based on minimum cost, minimum probability of misclassification, etc. The required partitioning procedure is a standard operation carried out for various applications of statistical decision theory.

Referring again to Figure 4, in an enhanced embodiment of the invention, the reference level generator 103 provides three separate reference levels, 401, 402 and 403, to the crossing rate estimator 104. The CRE 104 can therefore provide a further two values representing the number of times that the other thresholds, 402 and 403, are crossed. In Figure 4, the levels 402 and 403 are crossed or reached 18 and 8 times, respectively, as shown at U1, U2 ... U18 and W1 ... W8.

Also, referring to Figure 5, it will be noted that the points at which the target function 214' crosses the threshold can be classed into upcrossings and downcrossings. In an enhanced embodiment, the crossing slope estimator 105 separately averages the upslopes and downslopes, thus providing two values rather than one.

In this embodiment, the six values provided by the crossing rate estimator 104, the crossing slope estimator 105 and the sojourn interval estimator 106 are used by the image texture classifier 107 to classify the image within a six-dimensional feature space.

In an alternative arrangement, the three values from the crossing rate estimator 104 and/or the two values from the crossing slope estimator 105, can be combined, for example by using various weighting coefficients, to form a single respective value.

It is anticipated that in many applications the one-dimensional function will occupy the time domain, for example when the function is derived from a repetitively scanned image as might occur in some video systems. A time interval would thus represent a segment of the image that would be scanned during this notional time period. Accordingly, the argument of the target function in this situation may be the distance from a selected point on the scanning curve, or may be the time elapsed from a selected reference time instant.

The example implementation is rather simple for the sake of description clarity. A large number of alternative implementations exist. Alternative implementation may be obtained by:

(a) applying different mapping functions;
(b) applying different types of scale-invariant transformations;
(c) varying the rule used to define the feature sets;
(d) varying the number and levels of the discriminating signals; and/or
(e) using different statistical characteristics of the feature sets.

Although the invention has been described in the context of analysis of two-dimensional images, the techniques can be extended to analysis of multidimensional data, and in particular multidimensional images, by employing suitable space-filling curves. The image may be a conventional visual image, or may be an image in a non-visual part of the electromagnetic spectrum, or indeed may be in a different domain, such an ultrasound image.

## Claims

**1.** A method of deriving a feature vector representing an image, the method comprising:

(i) using a predetermined mapping function to derive a one-dimensional representation of the image, the one-dimensional representation having a level which successively varies to represent adjacent areas of the image; and
(ii) forming said feature vector by deriving at least a rate value representing the rate at which the level crosses that of a rate threshold function.

**2.** A method as claimed in claim 1, wherein the rate threshold function is a predetermined constant.

**3.** A method as claimed in claim 1 or 2, wherein the feature vector is formed by deriving a plurality of rate values each representing the rate at which the level of the one-dimensional representation crosses that of a respective different predetermined rate threshold function.

**4.** A method of deriving a feature vector representing an image, the method comprising:

(i) using a predetermined mapping function to derive a one-dimensional representation of the image, the one-dimensional representation having a level which successively varies to represent adjacent areas of the image; and
(ii) forming said feature vector by deriving at least a slope value dependent on the rate at which the level changes when it crosses that of a slope threshold function.

**5.** A method as claimed in any one of claims 1 to 3, wherein the feature vector is formed by deriving also a slope value dependent on the rate at which the level changes when it crosses that of a slope threshold function.

**6.** A method as claimed in claim 4 or 5, wherein the slope threshold function is a predetermined constant.

**7.** A method as claimed in claim 4, 5 or 6, wherein the slope value is a function of the average of the rates at which the level of the one-dimensional representation changes at a plurality of points at which the level crosses that of the slope threshold function.

**8.** A method as claimed in claim 4, 5, 6 or 7, wherein the feature vector is formed by deriving two slope values, one relating to crossings at which the level of the one-dimensional representation is increasing and the other relating to crossings at which the level of the one-dimensional representation is decreasing.

**9.** A method of deriving a feature vector representing an image, the method comprising:

(i) using a predetermined mapping function to derive a one-dimensional representation of the image, the one-dimensional representation having a level which successively varies to represent adjacent areas of the image; and
(ii) forming said feature vector by deriving at least a duration value dependent on the length of the interval for which the level remains above (or below) that of a duration threshold function.

**10.** A method as claimed in any one of claims 1 to 8, wherein the feature vector is formed by deriving also a duration value dependent on the length of the interval for which the level remains above (or below) that of a duration threshold function.

**11.** A method as claimed in claim 9 or 10, wherein the duration threshold function is a predetermined constant.

**12.** A method as claimed in claim 9, 10 or 11, where the duration value is a statistical function of multiple durations for which the level of the one-dimensional representation remains above (or below) said third predetermined function.

**13.** A method as claimed in any preceding claim, wherein the feature vector is derived from a first part of the one-dimensional representation, the method comprising the step of deriving further feature vectors representing respective successive parts of the one-dimensional representation.

**14.** A method as claimed in claim 13, wherein the successive parts overlap each other.

**15.** A method as claimed in any preceding claim, including the step of scaling the one-dimensional representation before deriving said feature vector to compensate for variations in the dynamic range of the representation.

**16.** A method as claimed in any preceding claim, wherein the one-dimensional representation of the image represents variations in the grey scale of the image.

**17.** A method as claimed in any preceding claim, when used to derive a feature vector representing a two-dimensional image.

**18.** A method of classifying an image, the method comprising deriving a feature vector using a method as claimed in any preceding claim, and then determining which one of a number of predetermined regions within a feature space contains that feature vector.

**19.** Apparatus for analysing an image, the apparatus being arranged to derive a feature vector using a method as claimed in any one of claims 1 to 17.

# FIGURE 1

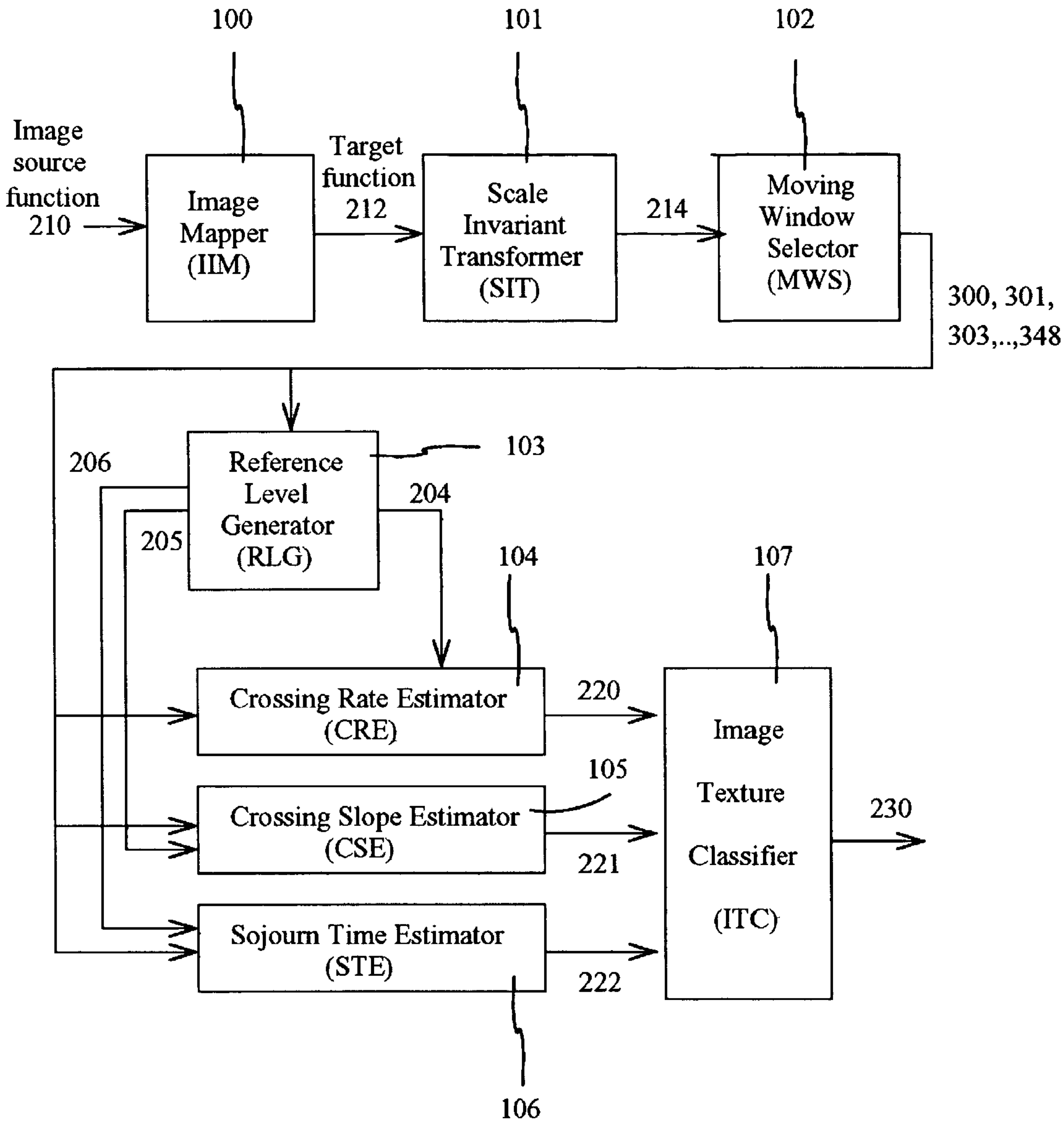
100
101
102
Image source function 210
Image Mapper (IIM)
Target function 212
Scale Invariant Transformer (SIT)
214
Moving Window Selector (MWS)
300, 301, 303,..,348
206
Reference Level Generator (RLG)
103
204
205
104
107
Crossing Rate Estimator (CRE)
220
Image Texture Classifier (ITC)
105
Crossing Slope Estimator (CSE)
230
221
Sojourn Time Estimator (STE)
222
106

# FIGURE 2

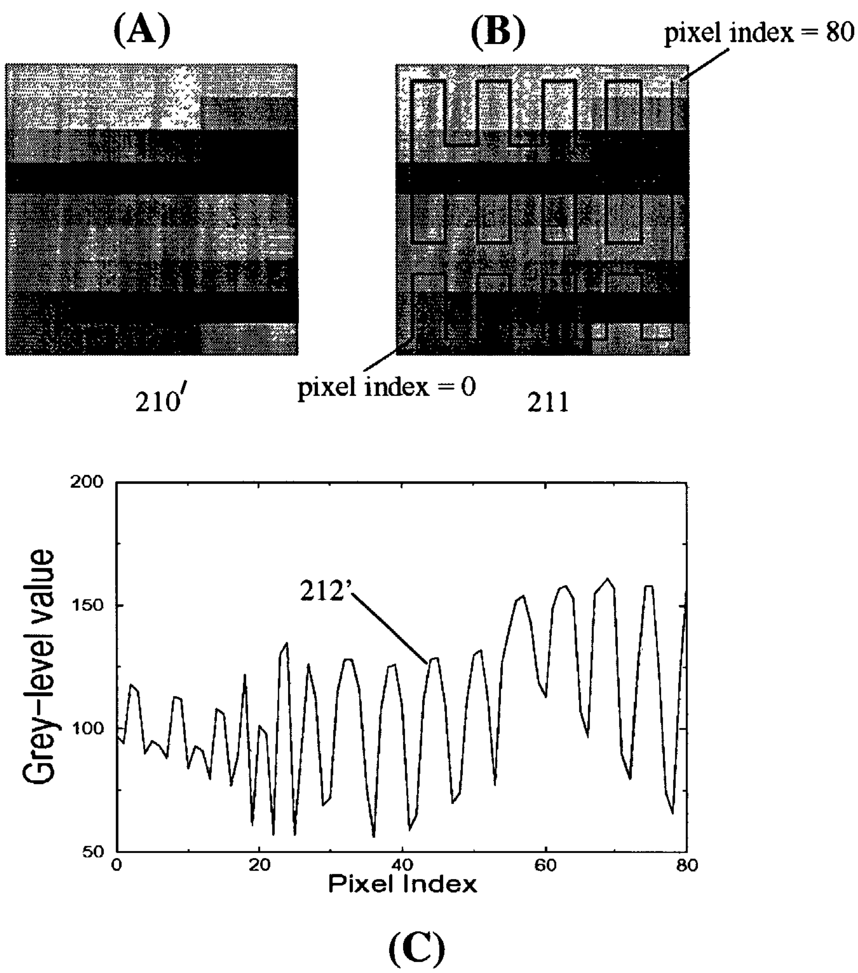
(A)
(B)
pixel index = 80
210'
pixel index = 0
211
200
150
100
50
Grey-level value
212'
0
20
40
60
80
Pixel Index
(C)

**FIGURE 3**

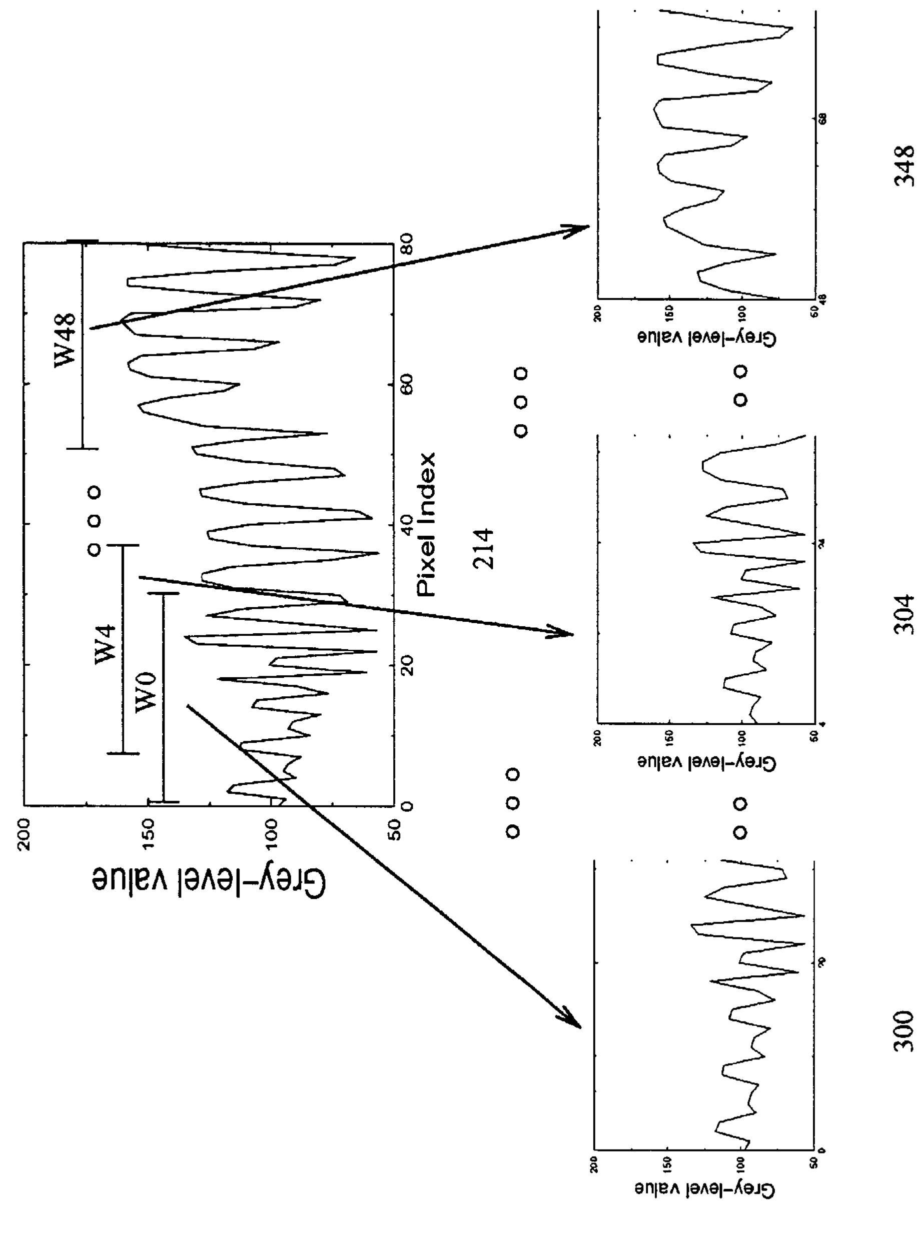

# FIGURE 4

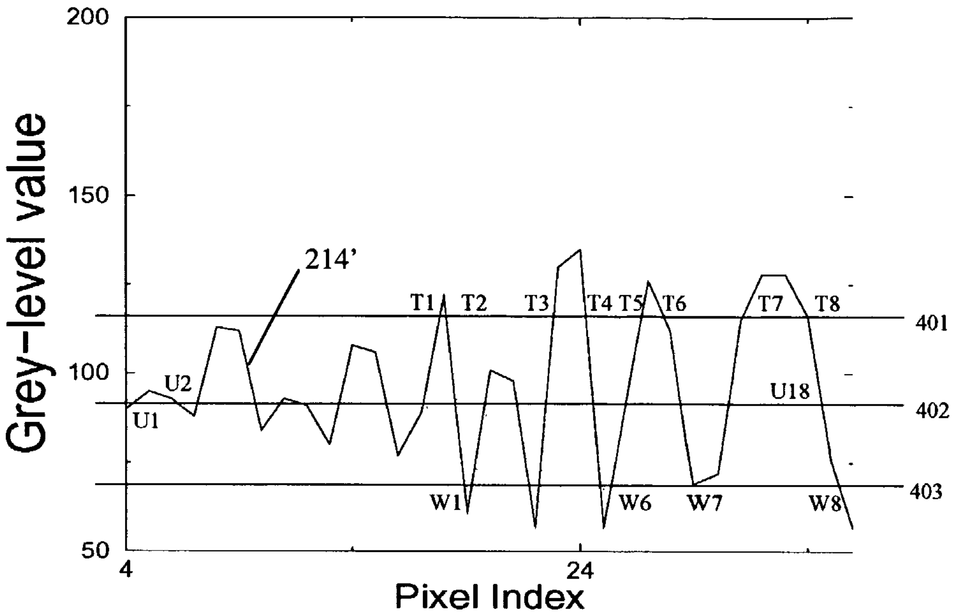


# FIGURE 5

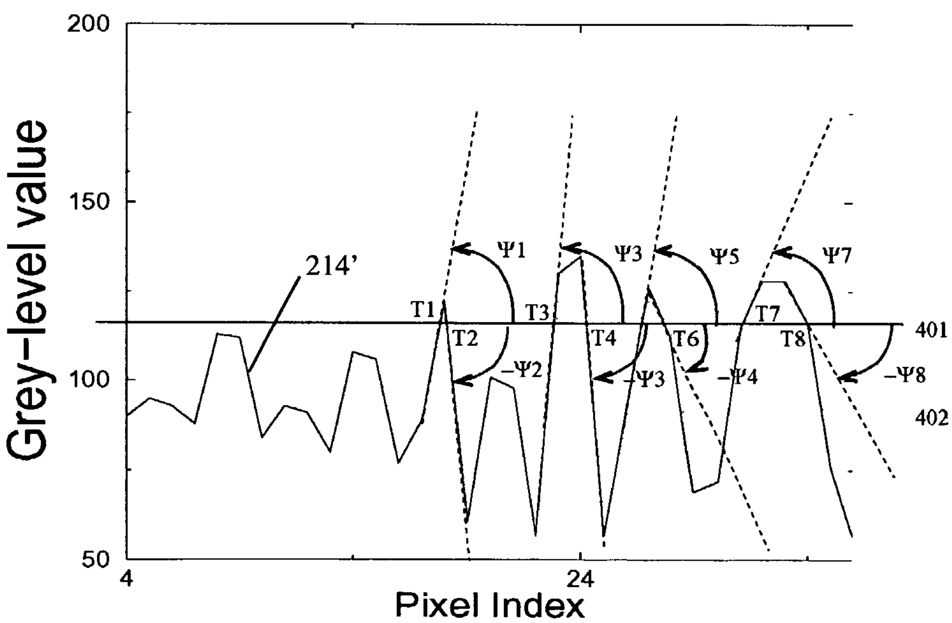

# FIGURE 6

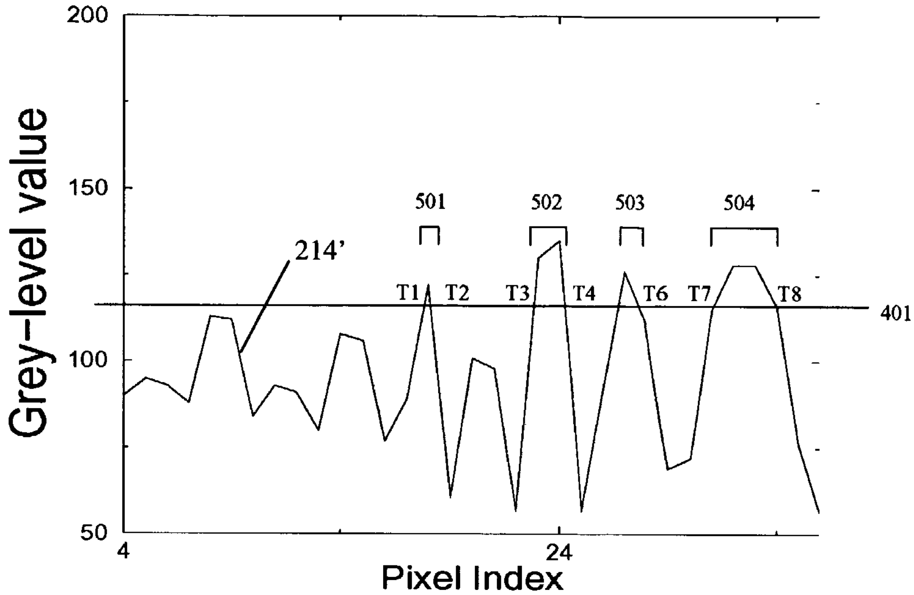


# FIGURE 7

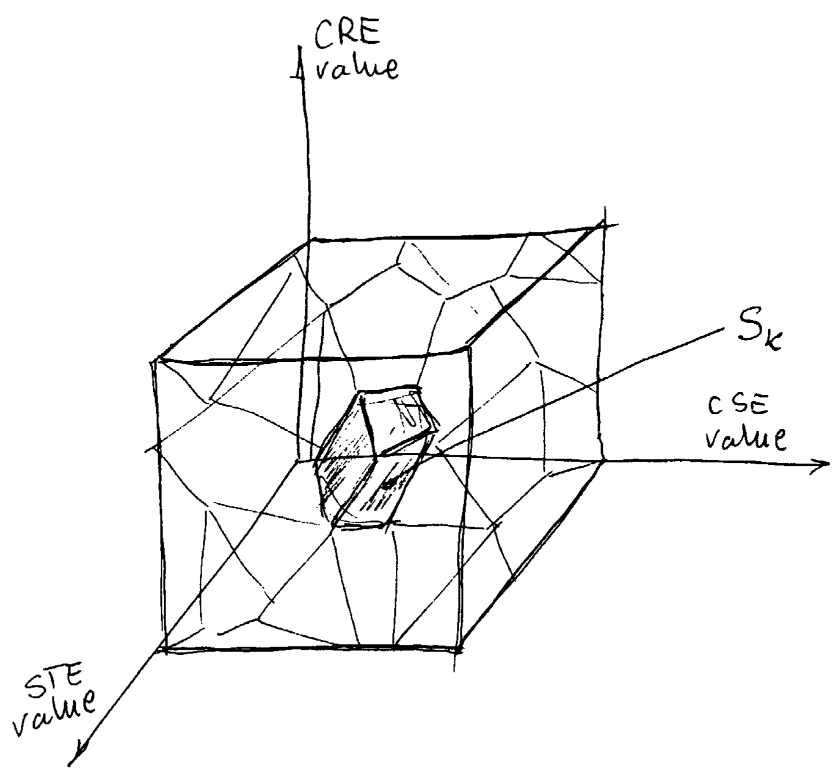

European Patent Office

# EUROPEAN SEARCH REPORT

Application Number
EP 01 30 9065

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | KUN-MIN YANG ET AL: "FRACTAL BASED IMAGE CODING SCHEME USING PEANO SCAN" PROCEEDINGS OF THE INTERNATIONAL SYMPOSIUM ON CIRCUITS AND SYSTEMS. ESPOO, FINLAND, JUNE 7 - 9, 1988, NEW YORK, IEEE, US, vol. 3 CONF. 21, 7 June 1988 (1988-06-07), pages 2301-2304, XP000011724 ISBN: 951-721-241-0 * page 2301, left-hand column, line 13 - page 2302, left-hand column, line 31 * --- | 1,4,9 | G06T7/40 G06T9/00 |
| Y | COLTUC D ET AL: "Jordan features for texture segmentation" PROCEEDINGS OF THE THIRD IEEE INTERNATIONAL CONFERENCE ON ELECTRONICS, CIRCUITS, AND SYSTEMS. ICECS '96 (CAT. NO.96TH8229), PROCEEDINGS OF THIRD INTERNATIONAL CONFERENCE ON ELECTRONICS, CIRCUITS, AND SYSTEMS, RODOS, GREECE, 13-16 OCT. 1996, pages 195-198 vol.1, XP002197746 1996, New York, NY, USA, IEEE, USA ISBN: 0-7803-3650-X * page 196, left-hand column, paragraph 3 - page 197, left-hand column, paragraph 4 * --- | 1,4,9 | TECHNICAL FIELDS SEARCHED (Int.Cl.7) G06T |
| A | NGUYEN P T ET AL: "Space filling curves and texture analysis" PROCEEDINGS OF THE 6TH INTERNATIONAL CONFERENCE ON PATTERN RECOGNITION, MUNICH, WEST GERMANY, 19-22 OCT. 1982, pages 282-285 vol.1, XP001064712 1982, New York, NY, USA, IEEE, USA * page 283, paragraph III * --- -/-- | 1 | |

The present search report has been drawn up for all claims

| Place of search | Date of completion of the search | Examiner |
|---|---|---|
| THE HAGUE | 29 April 2002 | Chateau, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 01 30 9065

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PHAM D T ET AL: "IMAGE COMPRESSION USING POLYLINES" PATTERN RECOGNITION, PERGAMON PRESS INC. ELMSFORD, N.Y, US, vol. 21, no. 6 INDEX, 1988, pages 631-637, XP000111605 ISSN: 0031-3203 * page 631, right-hand column, paragraph 2 - page 632, left-hand column, paragraph 3 * ----- | 1 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 29 April 2002 | Chateau, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)